**Europäisches Patentamt**

**European Patent Office**

**Office européen des brevets**

(11) Publication number: **0 061 322**
**A2**

# (12) EUROPEAN PATENT APPLICATION

(21) Application number: **82301428.7**

(22) Date of filing: **19.03.82**

(51) Int. Cl.³: **B 32 B 15/01**
**F 01 D 5/28, F 01 D 9/02**

(30) Priority: **23.03.81 JP 40354/81**

(43) Date of publication of application:
**29.09.82 Bulletin 82/39**

(84) Designated Contracting States:
**DE FR**

(71) Applicant: **Hitachi, Ltd.**
**5-1, Marunouchi 1-chome**
**Chiyoda-ku Tokyo 100(JP)**

(72) Inventor: **Chigasaki, Mitsuo**
**1012-180 Suwacho**
**Hitachi-shi(JP)**

(72) Inventor: **Otaka, Kiyoshi**
**1955-2 Shimana**
**Takahagi-shi(JP)**

(72) Inventor: **Okayama, Akira**
**2720-152 Kanesawacho**
**Hitachi-shi(JP)**

(74) Representative: **Paget, Hugh Charles Edward et al,**
**MEWBURN ELLIS & CO. 2/3 Cursitor Street**
**London EC4A 1BQ(GB)**

(54) Alloy coated metal structure having excellent resistance to high-temperature corrosion and thermal shock.

(57) A metal structure having excellent resistance to high-temperature corrosion and thermal shock, comprising an alloy coating consisting essentially of 10 to 35 weight % of Cr, 5 to 25 weight % of Al and 5 to 30 weight % of at least one element selected from the group consisting of Nb, Zr and Mn, the balance being at least one selected from the group of Fe, Ni and Co. Alternatively, the allow coating may additionally contain 0.01 to 30 weight % of at least one element selected from the group consisting of Y, Sc and rare earth metals and may further contain 5 to 30 weight % of Ta and 0.005 to 0.8 weight % of B. The metal structure is suitable for use in gas-turbine blades and nozzles.

ALLOY-COATED METAL STRUCTURE HAVING EXCELLENT

RESISTANCE TO HIGH-TEMPERATURE CORROSION AND THERMAL SHOCK

BACKGROUND OF THE INVENTION

FIELD OF THE INVENTION

The present invention relates to a metal structure comprising a novel alloy coating and having excellent resistance to corrosion and thermal shock. Particularly, the invention relates to a gas turbine component structure comprising an alloy coating which has excellent resistance to corrosion and thermal shock in atmospheres of highly corrosive, high temperature combustion gases.

DESCRIPTION OF THE PRIOR ART

Ni- or Co-base superalloys used in gas turbines, jet engines and the like are exposed to corrosive combustion gas atmospheres containing S, Cl, Na, V, Pb or the like. In addition, the recent rises in working temperature and the use of fuels of lower quality makes corrosive environments severer regarding materials used therein. Therefore, it is common practice today to protect the superalloys from combustion gases by various surface treatments thereof.

A variety of coating treatments are known, including aluminum coating and chromium coating by pack cementation process. In this process, a structure to be treated is packed in a pack mixture comprising powdered Al or Cr, powdered inert refractory material (for example,

$Al_2O_3$) and a powdered halide activator such as $NH_4Cl$, $NaCl$ or $NH_4F$ and is heated in an inert gas atmosphere to form a coating having high Al or Cr content on the surface of the structure.

In order to attain the properties required of the coating layer, such as corrosion resistance etc., it is necessary to incorporate two or more metals into the pack mixture to appropriately control the metal contents of the layer. However, in pack cementation process, the inclusion of two or more metals or alloys into the pack mixture makes it very difficult to produce a coating containing a plurality of metals.

Recently, an overlay coating method has been reported in which an alloy of a given composition having favorable corrosion resistance is coated on the surface of superalloy by using physical vapor deposition, plasma spray coating or the like, as described in U.S. Patents No. 3,928,026 and No. 4,005,989. It is also known that Co-Cr-Al-Y alloys and Ni-Cr-Al-Y alloys can be used as overlay coating alloys. However, these alloys do not necessarily exhibit sufficient resistance to the corrosion by $Na_2SO_4$-$NaCl$ in a combustion gas atmosphere containing $NaCl$ and, therefore, cannot cope with the rise in working temperature of gas turbines and jet engines or the reduction in quality of fuels used. Particularly, the blades, nozzles and combustion liner used in these machines are subjected to thermal shocks at the starting and stopping of operation. It has been found that a coating consisting of a Co-Cr-Al-Y alloy, a Ni-Cr-Al-Y alloy or the like has insufficient resistance to thermal shock.

It is disclosed in U.S. Patent No. 4,029,477 to incorporate 0.01 to 10 weight % of Hf into the above mentioned coating alloy composition. Also, it is disclosed in U.S. Patent No. 3,918,139 to add 3 to 12 weight % of Pt or Rh into the coating composition. However, inclusion of these elements has not offered sufficient resistance to the corrosion (corrosion by $Na_2SO_4$-NaCl) encountered in combustion gases containing NaCl.

## SUMMARY OF THE INVENTION

### OBJECT OF THE INVENTION

It is an object of the present invention to provide a metal structure comprising an alloy coating and having excellent resistance to corrosion and thermal shock, particularly for use in a gas turbine.

### STATEMENT OF THE INVENTION

The present invention resides in a metal structure having excellent resistance to corrosion and thermal shock, comprising an alloy coating which contains 10 to 35 weight % of Cr, 5 to 25 weight % of Al, 5 to 30 weight % of at least one element selected from the group consisting of Ta, Nb, Zr and Mn, and a primary constituent selected from the group consisting of Fe, Ni and Co. In another aspect, the structure of the invention comprises an alloy coating which contains, in addition to the above-described components, 0.01 to 30 weight % of at least one element selected from the group consisting of Y, Sc and rare earth metals. In yet another aspect, the invention resides in an alloy coating which contains, in addition to the above-described latter components, 0.005 to 0.8 weight % of B and 5 to 30 weight % of Ta.

The constituents of an alloy coating according to the present invention are used in amounts specified herein, an account thereof will be described below.

The amounts of Cr and Al are 10 to 35 weight % and 5 to 25 weight %, respectively. When Cr and Al are incorporated in amounts of less than 10 weight % and less than 5 weight %, respectively, the corrosion resistance of the alloy coating is reduced. On the other hand, when Cr and Al are more than 35 weight % and more than 25 weight %, respectively, the thermal shock resistance of the coating is reduced. Particularly preferable amounts are 18 to 25 weight % for Cr and 8 to 13 weight % for Al.

Each of Ta, Nb, Zr and Mn is important for corrosion resistance and when these elements are used in an amount of less than 5 weight %, the corrosion resistance is reduced, while the use more than 30 weight % of the elements leads to a reduction in thermal shock resistance. It is particularly preferable to use these elements in an amount of 10 to 25 weight %, more particularly 15 to 20 weight %.

Inclusion of Y, Sc and rare earth metals has not great effect on resistance to corrosion in static high-temperature conditions, but it is effective for resistance to corrosion under varying thermal conditions. Less than 0.01 weight % of these elements reduces corrosion resistance in varying thermal conditions and, on the other hand, more than 30 weight % of the elements reduces the thermal shock resistance. Particularly, it is preferable to use Y and Sc in an amount of 0.1 to 1 weight %, while the mischmetal including mainly of La and Ce is used preferably in an amount of not less than 5 weight %, more particularly 8 to 15 weight %.

Although 5 to 30 weight % of Ta is necessary to enhance corrosion resistance, the sole addition of Ta tends to induce cracking upon cooling and leads to poor thermal shock resistance, as contrasted to the case of adding Ta in combination with Nb, Zr and Mn. However, by adding B together with Ta, both corrosion resistance and thermal shock resistance can be improved. The amount of B used is preferably 0.0005 to 0.8 weight %. Less than 0.005 weight % of B provides no improvements of thermal shock resistance and, on the other hand, more than 0.8 weight % of B results in precipitation thereof at Ni grain boundaries, thereby reducing corrosion resistance.

The above-mentioned alloy coating is preferably one containing 10 to 35 weight % of Cr, 5 to 25 weight % of Al, 5 to 30 weight % of at least one element selected from the group consisting of Nb, Zr and Mn and 5 to 25 weight % of Co, the balance being essentially Ni.

The alloy coating according to the present invention is formed on the surface of a metal structure by sputtering, vapor deposition, plasma spray coating, cladding or the like to obtain metal structures having excellent resistance to corrosion and thermal shock, particularly to obtain long-life blades and nozzles for use in gas turbines or jet engines.

The thickness of the alloy coating on the blades and nozzles is preferably 50 to 200 μm, particularly about 100 μm.

In order to further improve the properties of the alloy coating as formed by the above-mentioned processes other than cladding, it is preferable to subject the coating to a homogenizing treatment by heating it in a non-oxidizing atmosphere. It is also preferable to conduct gas-phase Al cementation on the alloy coating.

When forming an alloy coating of the invention by vapor deposition or sputtering, a suitably shaped alloy member having the same composition as that of the alloy coating is used as a vapor source or a target for sputtering.

When forming an alloy coating of the present invention by plasma spraying, a powdered alloy having the same composition as that of the coating is used. The powder preferably has a particle size of not larger than 100 µm.

Furthermore, an alloy coating of the present invention can be formed also by diffusion bonding a foil of alloy of the same composition as that of the coating to the surface of a substrate at a high temperature while forcing the foil against the surface thereof. The alloy foil is preferably produced by a method in which a melt of the alloy is directly poured onto the circumferential surface of a rotating metal structure to quench and solidify the alloy on the surface.

Materials used for gas-turbine blades include Ni-base cast alloys of such compositions (weight %) as shown in Table 1, having precipitations of $\gamma'$ phase containing Al and Ti.

Table 1

| Alloy | C | Cr | Co | Mo | W | Ta | Nb | Al | Ti | Zr | B |
|-------|---|----|----|----|---|----|----|----|----|----|---|
| A | 0.1-0.2 | 8-10 | 9-11 | 2-3 | 9-11 | 1-2 | – | 5-6 | 1-2 | 0.02-0.08 | 0.01-0.02 |
| B | 0.12-0.22 | 13-15 | 8.5-10.5 | 3.5-4.5 | 3.5-4.5 | – | – | 2.5-3.5 | 4.5-5.5 | 0.01-0.05 | 0.01-0.02 |
| C | 0.04-0.10 | 17-19 | 18-20 | 3.5-4.5 | – | – | – | 2.5-3.5 | 2.5-3.5 | 0.02-0.08 | 0.005-0.01 |
| D | 0.08-0.15 | 15-17 | 7.5-9.5 | 1.3-2.3 | 2.2-3.2 | 1.3-2 | 0.7-1.3 | 2.5-3.5 | 3-4 | 0.03-0.1 | 0.007-0.013 |
| E | 0.08-0.15 | 13-17 | 17-20 | 4.5-5.75 | – | – | – | 3.75-4.75 | 3-4 | – | 0.05-0.1 |

Materials used for gas-turbine nozzles include Co-base cast alloys of such compositions (weight %) as shown in Table 2, containing an eutectic carbide and a secondary carbide.

Table 2

| Alloy | C | Si | Mn | Cr | Ni | W |
|-------|-----|-----|-----|-------|---------|---------|
| F | 0.2-0.3 | 0.5-1.5 | 0.5-1.5 | 28-31 | 9.5-11.5 | 6-8 |
| G | 0.5-0.7 | 0.5-1.5 | 0.5-1.5 | 20-23 | 9-11 | 6.5-8.5 |
| H | 0.2-0.3 | 0.5-1.5 | 0.5-1.5 | 24-27 | 9.5-11.5 | 6-8 |

| B | Zr | Fe | Other elements |
|------------|---------|---------|----------------|
| 0.01-0.015 | - | 1-3 | |
| 0.08-0.012 | 0.4-0.6 | 0.5-1.5 | Ta 3-4 Ti 0.1-0.3 |
| 0.008-0.012 | - | 1-3 | |

BRIEF DESCRIPTION OF THE DRAWINGS

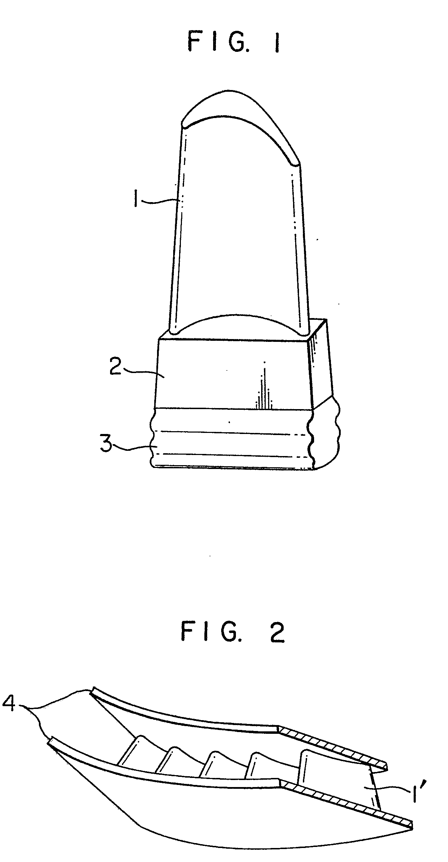

Fig. 1 is a perspective view of a representative gas-turbine blade, and Fig. 2 is a perspective view of a representative gas-turbine nozzle.

# Example 1

Each alloy having a composition (weight %) shown in Table 3 was melted by an electric-arc vacuum melting furnace, and the alloy cast from the melt was subjected to a homogenizing treatment comprising heating at 1100°C for 12 hours. Then, the alloy thus treated was shaped into specimens having dimensions of 10 mm x 13 mm x 5 mm, which were subjected to a corrosion test and a thermal shock test.

Table 3

| No. | Ni | Co | Cr | Al | Y | B | Ta,Nb,Zr,Mn,Fe, mischmetal |
|-----|------|------|----|----|-----|------|----------------------------|
| 1 | Bal. | 20 | 20 | 15 | 0.5 | 0 | 0 |
| 2 | Bal. | 39.5 | 30 | 10 | 0.5 | 0 | 0 |
| 3 | Bal. | 0 | 20 | 10 | 0.5 | 0 | Nb;25 |
| 4 | Bal. | 0 | 20 | 10 | 0.5 | 0 | Zr;20 |
| 5 | Bal. | 0 | 20 | 10 | 0.5 | 0 | Mn;15 |
| 6 | Bal. | 0 | 20 | 10 | 0.5 | 0.1 | Ta;15, Nb;5 |
| 7 | Bal. | 20 | 20 | 10 | 0.5 | 0.05 | Ta;25 |
| 8 | Bal. | 20 | 20 | 10 | 0.5 | 0.1 | Nb;25, Fe;10 |
| 9 | Bal. | 20 | 20 | 10 | 0.5 | 0.2 | Zr;20 |
| 10 | Bal. | 20 | 20 | 10 | 0 | 0 | Nb;15 |
| 11 | Bal. | 20 | 20 | 10 | 0.1 | 0.1 | Nb;15 |
| 12 | Bal. | 0 | 20 | 10 | 0 | 0 | Ta;15 mischmetal; 10 |
| 13 | Bal. | 0 | 30 | 10 | 0 | 0 | Zr;5 mischmetal;20 |

1  Corrosion Test

The corrosion test was conducted by applying a salt mixture of $Na_2SO_4$ and 25 weight % of NaCl onto the surface of each alloy specimen to an amount of 10 $mg/cm^2$, then heating the specimen at 800°C for 500 hours in air, removing the scale formed on the specimen and evaluating the results in terms of weight loss. The corrosion test results are shown in Table 4.

The mischmetal consists essentially of 32.9 weight % of La, 47.1 weight % of Ce, 15.0 weight % of Nd, and 5 weight % of Pr.

Table 4

| No. | Weight loss ($mg/cm^2$) |
|-----|-------------------------|
| 1   | 5.1                     |
| 2   | 4.9                     |
| 3   | 2.0                     |
| 4   | 3.9                     |
| 5   | 4.0                     |
| 6   | 2.2                     |
| 7   | 2.5                     |
| 8   | 2.1                     |
| 9   | 1.9                     |
| 10  | 3.4                     |
| 11  | 3.3                     |
| 12  | 2.6                     |
| 13  | 2.0                     |

In contrast to conventional coating alloys (No. 1 and No. 2), the coating alloys of the present invention. (No. 3 to 13) all showed excellent corrosion resistance.

## Thermal Shock Test

Each alloy specimen was subjected to two cycles, each having the steps of maintaining specimen at 700°C for 1 minute and water-cooling the specimen. The results were evaluated in terms of the number of cracks appearing on the surface of the specimen, by counting the number of the cracks crossing a straight line of a length of 1 cm scribed on the specimen surface. The test results are shown in Table 5.

Table 5

| No. | Number of cracks (per cm) |
|-----|---------------------------|
| 1 | 18 |
| 2 | 15 |
| 6 | 0 |
| 7 | 0 |
| 8 | 0 |
| 9 | 0 |
| 11 | 0 |
| 12 | 0 |
| 13 | 0 |

The test results shown in Table 5 reveal that, in contrast to the cases of all the conventional alloy specimens (No. 1 and No. 2) where cracks were observed, no evidence of cracking was observed on the alloy specimens of the present invention (No. 6 - 13), indicating the excellent thermal shock resistance of the coating alloys according to the invention.

Example 2

Alloy E in Table 1, which is a representative Ni-base superalloy, was selected as a material to be coated and was subjected to a coating treatment using a magnetron sputtering apparatus.

Specimens of the material, each having dimensions of 20 mm x 20 mm x 20 mm, were sputtered on their entire surface with the coating alloys shown in Table 3, to form respective coatings having a thickness of about 90 μm. The composition of each coating obtained was substantially the same as that of the alloy used to produce it. The resultant alloy-coated specimens were subjected to the corrosion test and the thermal shock test in the same manner as in Example 1. The test results were similar to those obtained in Example 1.

Example 3

A powdered alloy having the composition of No. 7 in Table 3 and having a particle size of 10 to 44 μm is selected as an alloy containing Ta, Y and B. By using the powdered alloy and a reduced atmosphere of 150 Torr, plasma spray coating was conducted on a substrate of the alloy No. F shown in Table 2, to form a coating of about 100 µm on the entire surface of the substrate. The shape of the substrate is the same as in Example 3. The alloy-coated specimen thus obtained was subjected to the corrosion test and the thermal shock test in the same manner as in Table 1. The test results, evaluated in terms of both weight loss by corrosion and the number of cracks, were similar to those obtained in Example 1.

Example 4

Fig. 1 is a perspective view of a representative gas-turbine blade, and Fig. 2 is a perspective view of a gas-turbine nozzle.

Shown in the figures are airfoil section 1,1', shank 2, dovetail 3 and side wall 4.

A molten alloy of No. 9 in Table 3 is poured directly onto the circumferential surface of a circular disc of a metal, to obtain an alloy foil having a width of 50 mm and a thickness of 100 µm. The foil is wound around the airfoil section 1 of the blade and also around the airfoil section 1' of the nozzle, and the ends of the wound foils are sealed by using plasma in vacuum. After heating the foil-wound sections at 1000°C in an Ar gas atmosphere at a high pressure, it was confirmed that an alloy coating was uniformly diffusion-bonded to the airfoil section.

The resulting gas-turbine blade and nozzle according to the invention have excellent resistance to both corrosion by high-temperature combustion gases and thermal shocks imposed by rapid heating and cooling, as is evident from the working examples described above.

In the case of the blade, it is necessary to coat the entire surface of at least the airfoil section, and it is preferable to coat a portion ranging up to about one half of the shank 2 on the airfoil section side. That face of the shank 2 which is in contact with the airfoil section is difficult to cover with the foil. Therefore, it is preferable to form an alloy coating on the face by a flame spraying process.

In the case of the nozzle, it is necessary to coat the entire surface of the airfoil section 1', and it is preferable to coat also those faces of the side walls 4 which are in contact with the airfoil section 1'. The coating of the faces can be conducted also by the combination of the above-described methods other than that of using foils.

As described hereinabove, the present invention provides a metal structure having excellent resistance to both high-temperature corrosion and thermal shock, and excellent effects thereof are exhibited particularly in its application to gas-turbine blades and nozzles.

CLAIMS:

1.      A metal structure comprising a metal body and, on said body, an alloy coating containing Cr and Al, characterized in that

said coating consists essentially of 10 to 35 weight % of Cr, 5 to 25 weight % of Al, and 5 to 30 weight % of at least one of Nb, Zr and Mn, the balance being at least one of Fe, Ni and Co.

2.      A metal structure comprising a metal body and, on said body, an alloy coating containing Cr and Al, characterized in that

said coating consists essentially of 10 to 35 weight % of Cr, 5 to 25 weight % of Al, and 5 to 30 weight % of at least one of Ta, Nb, Zr and Mn, 0.01 to 30 weight % of at least one element selected from Y, Sc and the rare earth metals, the balance being at least one of Fe, Ni and Co.

3.      A metal structure comprising a metal body and, on said body, an alloy coating containing Cr and Al, characterized in that

said coating consists essentially of 10 to 35 weight % of Cr, 5 to 25 weight % of Al, and 5 to 30 weight % of at least one of Ta, Nb, Zr and Mn, 0.01 to 30 weight % of at least one element selected from Y, Sc and the rare earth metals, and 0.005 to 0.8 weight % of B, the balance being at least one of Fe, Ni and Co.

4.      A metal structure according to claim 2 or claim 3 containing Y and Sc in said alloy coating in an amount of 0.1 to 1 weight %.

5.      A metal structure according to any one of claims 2 to 4, wherein said alloy coating contains rare earth metals incorporated in the form of mischmetal including La and Ce as main constituents thereof, the amount of mischmetal being 5 to 15 weight % of said coating.

6.      A metal structure according to any one of claims 1 to 5, wherein said balance consists essentially of Ni and 5 to 25 weight % of Co.

7.      A metal structure according to any one of claims 1 to 6, wherein the alloy coating is formed by vapor deposition or sputtering, and a vapor source used in said vapor deposition or a target used in said sputtering is of a suitably shaped alloy having the same composition as that of said alloy coating.

8.      A metal structure according to any one of claims 1 to 6, wherein the alloy coating is formed by plasma spraying and a powder used in said plasma spraying comprises an alloy having the same composition as that of said alloy coating.

9.      A metal structure according to any one of claims 1 to 6, wherein the alloy coating is formed by diffusion bonding and an alloy covering subjected to said diffusion bonding comprises a foil having the same composition as that of said alloy coating.

10. A metal structure according to any one of claims 1 to 9 which is a gas-turbine blade, wherein the surface of said blade exposed in use to combustion gases is provided with said alloy coating.

11. A gas-turbine blade according to claim 10 wherein said body comprises a Ni-base cast alloy which contains Cr and has $\gamma$' phase in a matrix.

12. A metal structure according to any one of claims 1 to 9 which is a gas-turbine nozzle, wherein the surface of the nozzle exposed in use to combustion gases is provided with said alloy coating.

13. A gas-turbine nozzle according to claim 12, wherein said body comprises a cast alloy which contains Cr and at least one of Ni and Co as the main constituents thereof, which cast alloy has eutectic carbide and secondary carbide in a matrix.

FIG. 1

FIG. 2